# EUROPEAN PATENT APPLICATION

(11) **EP 1 785 873 A1**
(43) Date of publication of application: **16.05.2007**
(21) Application number: 05256928.2
(22) Date of filing: 09.11.2005
(51) Int. Cl.: G06F 12/02, G06F 9/46

(54) **Methods and apparatus for use in controlling garbage collection processes in a mobile communication device**

(71) Applicant: Research In Motion Limited, Waterloo, Ontario N2L 3W8 (CA)
(72) Inventor: Dahms, John Frederic Arthur, Waterloo Ontario N2K 2N1 (CA)
(74) Representative: Hibbert, Juliet Jane Grace

(57) **Abstract**

A mobile communication device has an application program which provides it with user interface functionality for communications (e.g. e-mail communications). A garbage collection process for the application program is initiated in response to detecting a predetermined condition, such as a low memory condition or a high object creation count condition, after a continuous time period of no user interface activity at a user interface of the mobile communication device is identified. The garbage collection process involves freeing unreachable objects of the application program to reclaim memory space and consolidating reachable objects of the application program so as to increase available contiguous memory space. If a user interface signal from the user interface is identified during the garbage collection process, the garbage collection process is terminated. On the other hand, an uninterruptible garbage collection process is performed in response to identifying a more severe condition, such as a memory allocation failure. Advantageously, garbage collection processes are performed without substantially interfering with use of the mobile communication device by the end user.

## Description

### BACKGROUND

### Field of the Technology

The present application relates generally to mobile communication devices having application programs which utilize "garbage collection" processes and techniques for controlling the same.

### Description of the Related Art

A mobile communication device, such as a mobile station operating in a wireless communication network, may provide for voice telephony and data packet communications through the wireless network. A mobile station may be compatible with 3^{rd} Generation (3G) communication standards and utilize Global System for Mobile Communications (GSM), Time Division Multiple Access (TDMA), or Code Division Multiple Access (CDMA) wireless technologies, as examples. A sophisticated mobile station may have an application program which is stored in its memory and executed by one or more processors (e.g. a microprocessor). The application program helps provide the mobile station with user interface functionality for communications. The application program may be, for example, an e-mail application program which provides the end user with user interface functionality for reading and authoring e-mail messages.

The application program may be written in any suitable programming language, such as JAVA^{®} programming language. JAVA^{®} is a registered trademark of Sun Microsystems, Inc. A JAVA virtual machine (JVM) is the component of JAVA technology that is responsible for independence between the hardware and operating system, the small size of compiled JAVA code, and the ability to protect users from malicious programs. The JVM is an abstract computing machine. Like a real computing machine, the JVM has an instruction set and manipulates various memory areas at run time.

A "heap" of the JVM stores all objects created by the JAVA application program. Objects are created by JAVA's new operator and memory space for new objects is allocated on the heap at run time. "Garbage collection" is a JAVA process which automatically frees objects that are no longer referenced by an application program. When an object is no longer referenced by an application program, the heap space that the object occupies is effectively released or recycled so that the space can be made available for subsequently-produced objects. The garbage collector must determine which objects are no longer referenced by the application program and make available the heap space occupied by such unreferenced objects. There are many ways in which to implement garbage collection processes and such techniques are well-documented and publicly available.

The garbage collection process frees one from having to keep track of when to free allocated memory, which prevents many potential application bugs and hardships. However, garbage collection processes are processor-intensive and require that the application program be temporarily suspended. The garbage collection process may take a relatively long time to complete as well. This interferes with use of a mobile communication device, especially when the need for communications by the end user may be critical.

Accordingly, what are needed are methods and apparatus for use in controlling garbage collection processes in mobile communication devices.

### SUMMARY

In one illustrative example of the present application, a mobile communication device has an application program which provides it with user interface functionality for communications (e.g. e-mail communications). A garbage collection process for the application program is initiated in response to detecting a predetermined condition, such as a low memory condition or a high object creation count condition, after a continuous time period of no user interface activity at a user interface of the mobile communication device is identified. The garbage collection process involves freeing unreachable objects of the application program to reclaim memory space and consolidating reachable objects of the application program so as to increase available contiguous memory space. If a user interface signal from the user interface is identified during the garbage collection process, the garbage collection process is terminated. On the other hand, an uninterruptible garbage collection process is performed in response to identifying a more severe condition, such as a memory allocation failure. Advantageously, garbage collection processes are performed without substantially interfering with use of the mobile communication device by the end user.

### BRIEF DESCRIPTION OF THE DRAWINGS

Embodiments of present application will now be described by way of example with reference to attached figures, wherein:
FIG. 1 is a block diagram which illustrates pertinent components of a mobile station and a wireless communication network;
FIG. 2 is a more detailed diagram of a preferred mobile station of FIG. 1;
FIG. 3 is a system structure which helps provide data communication services or the mobile station in the wireless network of FIGs. 1 and 2;
FIG. 4 is an illustration depicting part of a garbage collection process of an application program of the mobile station, revealing that reachable objects are identified and unreachable objects of the application program are freed to reclaim memory space in the memory;
FIG. 5 is another illustration depicting part of the garbage collection process, revealing that the reachable objects of the application program are consolidated so as to increase available contiguous memory space in the memory; and
FIG. 6 is a flowchart for describing a method for use in controlling the garbage collection process in the mobile station.

### DETAILED DESCRIPTION OF THE PREFERRED EMBODIMENTS

In one illustrative example of the present application, a mobile communication device has an application program which provides it with user interface functionality for communications (e.g. e-mail communications). A garbage collection process for the application program is initiated in response to detecting a predetermined condition, such as a low memory condition or a high object creation count condition, after a continuous time period of no user interface activity at a user interface of the mobile communication device is identified. The garbage collection process involves freeing unreachable objects of the application program to reclaim memory space and consolidating reachable objects of the application program so as to increase available contiguous memory space. If a user interface signal from the user interface is identified during the garbage collection process, the garbage collection process is terminated. On the other hand, an uninterruptible garbage collection process is performed in response to identifying a more severe condition, such as a memory allocation failure. Advantageously, garbage collection processes are performed without substantially interfering with use of the mobile communication device by the end user.

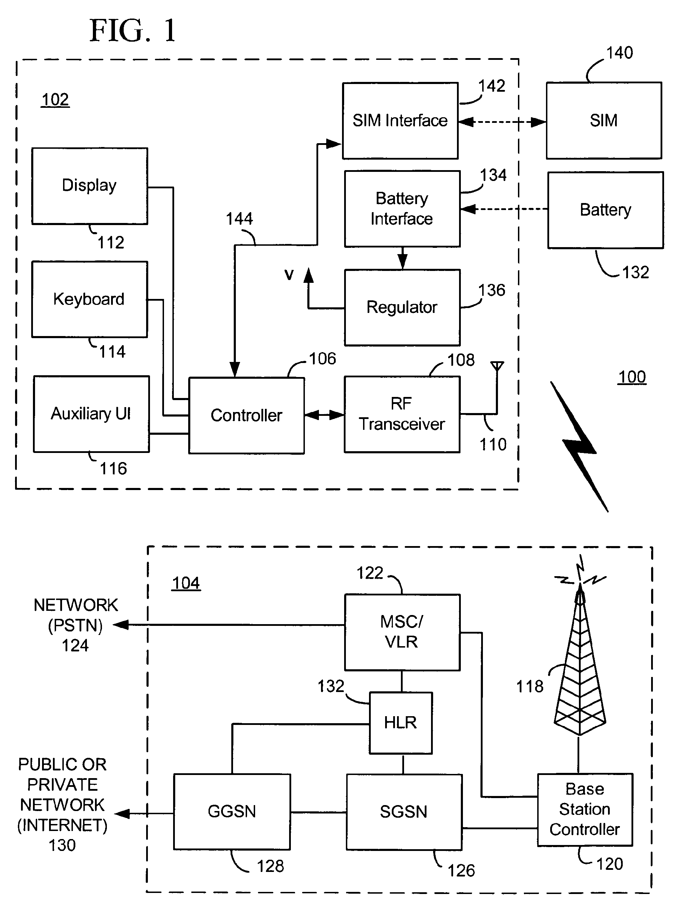

FIG. 1 is a block diagram of a communication system 100 which includes a mobile station 102 (one type of wireless or mobile communication device) which communicates through a wireless communication network 104. Mobile station 102 preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110. Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from network 104 over a wireless link via antenna 110. RF transceiver circuitry 108 performs functions similar to those of station 118 and BSC 120, including for example modulation/demodulation and possibly encoding/decoding and encryption/decryption. It is also contemplated that RF transceiver circuitry 108 may perform certain functions in addition to those performed by BSC 120. It will be apparent to those skilled in art that RF transceiver circuitry 108 will be adapted to particular wireless network or networks in which mobile station 102 is intended to operate.

Mobile station 102 includes a battery interface 134 for receiving one or more rechargeable batteries 132. Battery 132 provides electrical power to electrical circuitry in mobile station 102, and battery interface 134 provides for a mechanical and electrical connection for battery 132. Battery interface 134 is coupled to a regulator 136 which regulates power to the device. When mobile station 102 is fully operational, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface 142. SIM 140 is one type of a conventional "smart card" used to identify an end user (or subscriber) of mobile station 102 and to personalize the device, among other things. Without SIM 140, the mobile station terminal is not fully operational for communication through wireless network 104. By inserting SIM 140 into mobile station 102, an end user can have access to any and all of his/her subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including datebook (or calendar) information and recent call information.

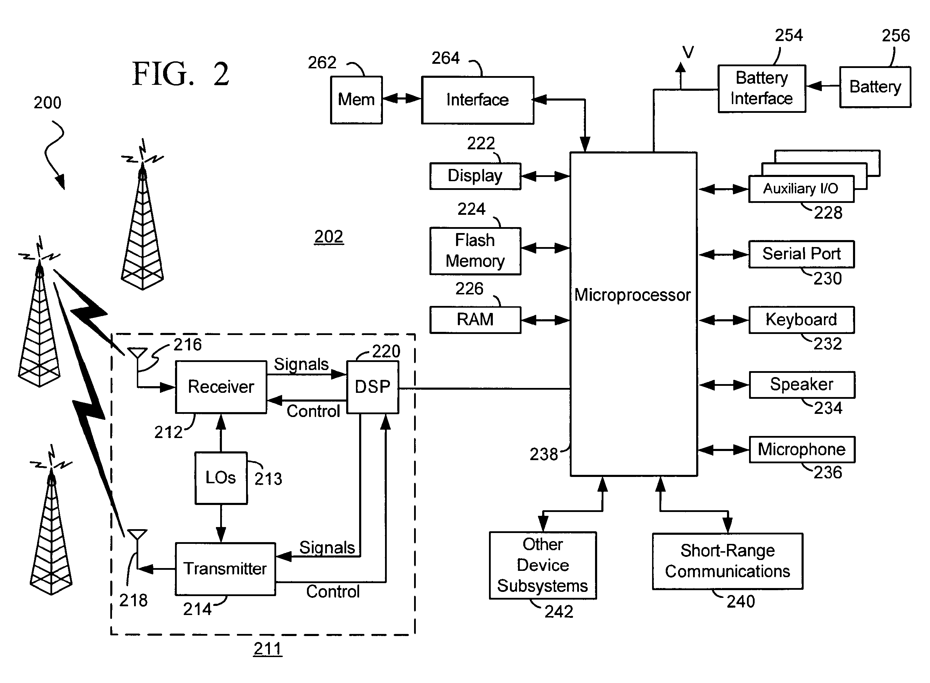

Mobile station 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 402 of FIG. 2.

Mobile station 102 communicates in and through wireless communication network 104. Wireless communication network 104 may be a cellular telecommunications network. In the embodiment of FIG. 1, wireless network 104 is configured in accordance with General Packet Radio Service (GPRS) and a Global Systems for Mobile (GSM) technologies. Wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 124. SGSN 126 is coupled to BSC 120 and to GGSN 128, which is in turn coupled to a public or private data network 130 (such as the Internet). HLR 132 is coupled to MSC 122, SGSN 126, and GGSN 128.

Station 118 is a fixed transceiver station, and station 118 and BSC 120 may be referred to as transceiver equipment. The transceiver equipment provides wireless network coverage for a particular coverage area commonly referred to as a "cell". The transceiver equipment transmits communication signals to and receives communication signals from mobile stations within its cell via station 118. The transceiver equipment normally performs such functions as modulation and possibly encoding and/or encryption of signals to be transmitted to the mobile station in accordance with particular, usually predetermined, communication protocols and parameters, under control of its controller. The transceiver equipment similarly demodulates and possibly decodes and decrypts, if necessary, any communication signals received from mobile station 102 within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and mobile station 102. An RF channel is a limited resource that must be conserved, typically due to limits in overall bandwidth and a limited battery power of mobile station 102. Those skilled in art will appreciate that a wireless network in actual practice may include hundreds of cells, each served by a station 118 (i.e. or station sector), depending upon desired overall expanse of network coverage. All pertinent components may be connected by multiple switches and routers (not shown), controlled by multiple network controllers.

For all mobile station's 102 registered with a network operator, permanent data (such as mobile station 102 user's profile) as well as temporary data (such as mobile station's 102 current location) are stored in HLR 132. In case of a voice call to mobile station 102, HLR 132 is queried to determine the current location of mobile station 102. A Visitor Location Register (VLR) of MSC 122 is responsible for a group of location areas and stores the data of those mobile stations that are currently in its area of responsibility. This includes parts of the permanent mobile station data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of mobile stations. SGSN 126 also performs security functions and access control. Gateway GPRS Support Node (GGSN) 128 provides interworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by mobile station 102 or by the transceiver equipment instructing mobile station 102 to select a particular cell. Mobile station 102 informs wireless network 104 when it reselects another cell or group of cells, known as a routing area.

In order to access GPRS services, mobile station 102 first makes its presence known to wireless network 104 by performing what is known as a GPRS "attach". This operation establishes a logical link between mobile station 102 and SGSN 126 and makes mobile station 102 available to receive, for example, pages via SGSN, notifications of incoming GPRS data, or SMS messages over GPRS. In order to send and receive GPRS data, mobile station 102 assists in activating the packet data address that it wants to use. This operation makes mobile station 102 known to GGSN 128; interworking with external data networks can thereafter commence. User data may be transferred transparently between mobile station 102 and the external data networks using, for example, encapsulation and tunneling. Data packets are equipped with GPRS-specific protocol information and transferred between mobile station 102 and GGSN 128.

Those skilled in art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a detailed block diagram of a preferred mobile station 202 of the present application. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a Subscriber Identity Module or "SIM" card 262 to be inserted in a SIM interface 264 in order to operate in the network. SIM 262 includes those features described in relation to FIG. 1. Mobile station 202 is a battery-powered device so it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown) which provides power V+ to all of the circuitry.

Mobile station 202 includes a microprocessor 238 (which is one implementation of controller 106 of FIG. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, as well as techniques of the present application, will normally be installed on mobile station 202 during its manufacture. At least one application program, which may be an e-mail application program, is a garbage-collection type program such as a JAVA^{®} program. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 256 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

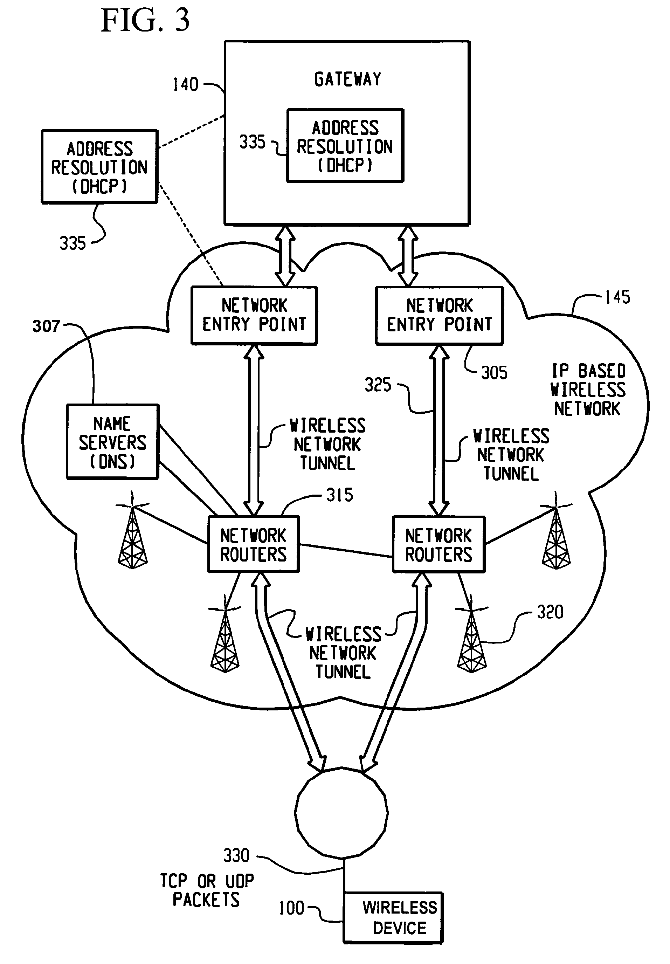

FIG. 3 shows a system structure which helps provide data communication services for the mobile station. In particular, FIG. 3 shows basic components of an IP-based wireless data network which may be utilized. A mobile station 100 communicates with a wireless packet data network 145, and may also be capable of communicating with a wireless voice network (not shown). As shown in FIG. 3, a gateway 140 may be coupled to an internal or external address resolution component 335 and one or more network entry points 305. Data packets are transmitted from gateway 140, which is source of information to be transmitted to mobile station 100, through network 145 by setting up a wireless network tunnel 325 from gateway 140 to mobile station 100. In order to create this wireless tunnel 325, a unique network address is associated with mobile station 100. In an IP-based wireless network, however, network addresses are typically not permanently assigned to a particular mobile station 100 but instead are dynamically allocated on an as-needed basis. It is thus preferable for mobile station 100 to acquire a network address and for gateway 140 to determine this address so as to establish wireless tunnel 325.

Network entry point 305 is generally used to multiplex and demultiplex amongst many gateways, corporate servers, and bulk connections such as the Internet, for example. There are normally very few of these network entry points 305, since they are also intended to centralize externally available wireless network services. Network entry points 305 often use some form of an address resolution component 335 that assists in address assignment and lookup between gateways and mobile stations. In this example, address resolution component 335 is shown as a dynamic host configuration protocol (DHCP) as one method for providing an address resolution mechanism.

A central internal component of wireless data network 345 is a network router 315. Normally, network routers 315 are proprietary to the particular network, but they could alternatively be constructed from standard commercially available hardware. The purpose of network routers 315 is to centralize thousands of fixed transceiver stations 320 normally implemented in a relatively large network into a central location for a long-haul connection back to network entry point 305. In some networks there may be multiple tiers of network routers 315 and cases where there are master and slave network routers 315, but in all such cases the functions are similar. Often network router 315 will access a name server 307, in this case shown as a dynamic name server (DNS) 307 as used in the Internet, to look up destinations for routing data messages. Fixed transceiver stations 320, as described above, provide wireless links to mobile stations such as mobile station 100.

Wireless network tunnels such as a wireless tunnel 325 are opened across wireless network 345 in order to allocate necessary memory, routing, and address resources to deliver IP packets. Such tunnels 325 are established as part of what are referred to as Packet Data Protocol or "PDP contexts" (i.e. data sessions). To open wireless tunnel 325, mobile station 100 must use a specific technique associated with wireless network 345. The step of opening such a wireless tunnel 325 may require mobile station 100 to indicate the domain, or network entry point 305 with which it wishes to open wireless tunnel 325. In this example, the tunnel first reaches network router 315 which uses name server 307 to determine which network entry point 305 matches the domain provided. Multiple wireless tunnels can be opened from one mobile station 100 for redundancy, or to access different gateways and services on the network. Once the domain name is found, the tunnel is then extended to network entry point 305 and necessary resources are allocated at each of the nodes along the way. Network entry point 305 then uses the address resolution (or DHCP 335) component to allocate an IP address for mobile station 100. When an IP address has been allocated to mobile station 100 and communicated to gateway 140, information can then be forwarded from gateway 140 to mobile station 100.

According to the present application, the mobile station of the present application has an application program which is stored in its memory (e.g. flash memory 224 of FIG. 2) and executed by one or more processors (e.g. microprocessor 238 of FIG. 2). The application program helps provide the mobile station with user interface functionality for communications. The application program may be, for example, an e-mail application program which provides the end user with user interface functionality for reading and authoring e-mail messages. The application program may be written in any suitable programming language, such as JAVA® programming language. JAVA® is a registered trademark of Sun Microsystems, Inc.

A JAVA virtual machine (JVM) is the component of JAVA technology that is responsible for independence between the hardware and operating system, the small size of compiled JAVA code, and the ability to protect users from malicious programs. The JVM is an abstract computing machine. Like a real computing machine, the JVM has an instruction set and manipulates various memory areas at run time. A "heap" of the JVM stores all objects created by the JAVA application program. Objects are created by JAVA's new operator and memory space for new objects is allocated on the heap at run time. "Garbage collection" is a JAVA process which automatically frees objects that are no longer referenced by an application program. When an object is no longer referenced by an application program, the heap space that the object occupies is effectively released or recycled so that the space can be made available for subsequently-produced objects. The garbage collector must determine which objects are no longer referenced by the application program and make available the heap space occupied by such unreferenced objects. There are many ways in which to implement garbage collection processes, and such techniques are well-documented and publicly available.

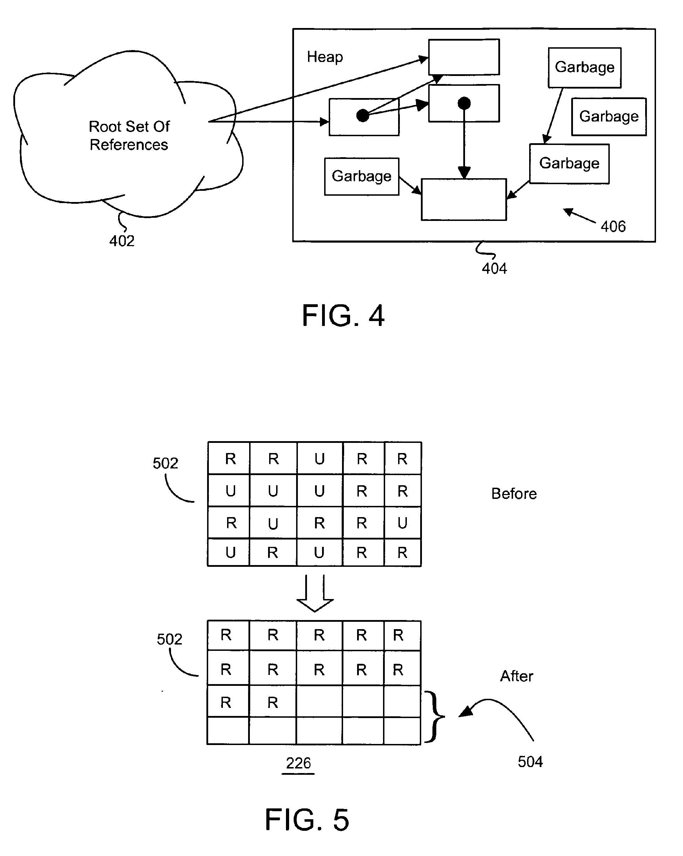

FIG. 4 is an illustration depicting part of a garbage collection process for an application program of the mobile station. The application program has a root set of references 402 to a plurality of objects 406 of a heap 404 in memory (e.g. random access memory or RAM 226 of FIG. 2). In the garbage collection process, reachable objects are identified and unreachable objects of the application program (named "garbage" in FIG. 4) are freed to reclaim memory space in memory. FIG. 5 is another illustration depicting part of the garbage collection process, where a memory space 502 of memory 226 is shown before and after the garbage collection process. After unreachable objects (labeled "U" in FIG. 5) are freed, reachable objects (labeled "R" in FIG. 5) of the application program are consolidated so as to increase an available contiguous memory space 504 in memory 226.

Thus, the garbage collection process frees one from having to keep track of when to free allocated memory, which prevents many potential application bugs and hardships. However, garbage collection processes are processor-intensive and require that the application program be temporarily suspended. The garbage collection process may take a relatively long time to complete as well. This interferes with use of a mobile station, especially when the need for communications by the end user may be critical.

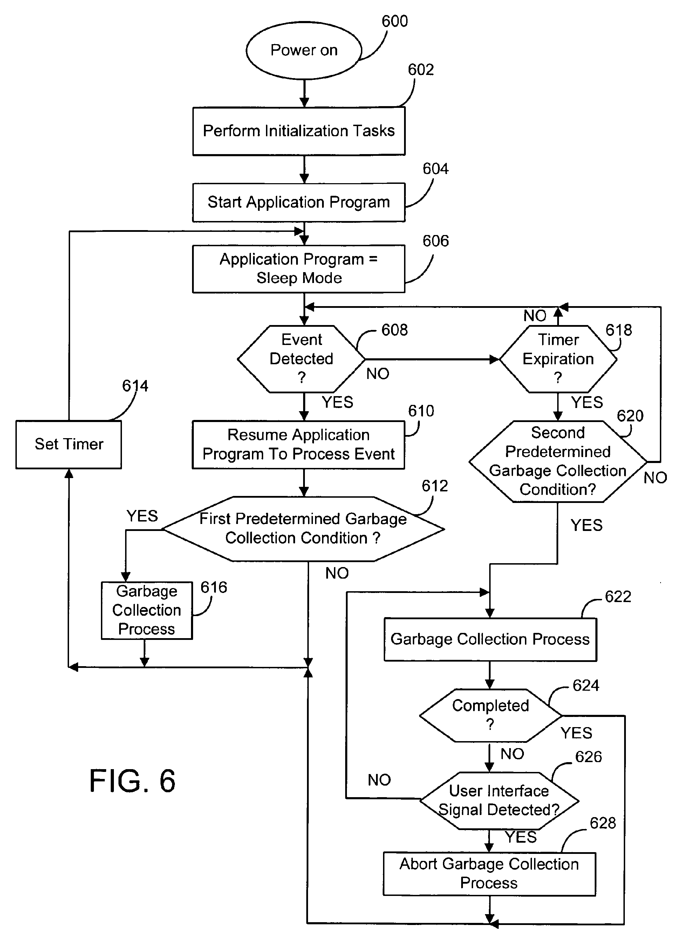

FIG. 6 is a flowchart for describing a method for use in controlling the garbage collection process in the mobile station. The method of FIG. 6 is executed by one or more processors of the mobile station. A computer program product of the present application may include a storage medium and computer instructions stored in the storage medium which are executable by the one or more processors to perform the method.

In response to a power on event 600 of the mobile station in FIG. 6, an initialization procedure is performed (step 602 of FIG. 6) and an application program for the mobile station is started (step 604 of FIG. 6). The application program, which may be an e-mail application program, is a garbage-collection type program such as a JAVA^{®} program which utilizes JVM. A radio communication program for receiving messages and communications via radio communications, which is separate and apart from the application program, is also started and runs independently from the application program. Communication operation of the mobile station (e.g. voice telephony and/or e-mail operation) is thereby enabled and active, where the mobile station may or may not be actively engaged in voice or data call. The application program then enters into a sleep mode (step 606 of FIG. 6) where subsequent application processes are event-driven.

In response to a detected event at the mobile station (step 608 of FIG. 6), the application program is exited from the sleep mode and resumed to process the event (step 610 of FIG.6). An event may be, for example, a user interface signal detection or a page message for a voice call received through the wireless transceiver. While the application program is running, objects are created by the application program and stored in memory. During this time, the mobile station may identify whether a first predetermined "garbage collection" condition is detected or identified (step 612 of FIG. 6). This first predetermined condition may be a memory allocation failure, where the application program attempts to allocate memory space during processing of the event but there is no available memory to do so. This type of condition is a severe low memory condition. If the first predetermined condition is identified at step 612, then a garbage collection process is started (step 616 of FIG. 6). As described above in relation to FIGs. 4-5, the garbage collection process involves freeing unreachable objects of the application program to reclaim memory space and consolidating reachable objects of the application program so as to increase available contiguous memory space. Note that this "reactive" garbage collection process of step 616 is uninterruptible, or at least uninterruptible from user interface signals received at the user interface of the mobile device.

After the garbage collection process in step 616 is completed, or after the first predetermined condition is not identified in step 612 and the event is merely processed, a timer in the mobile station is set or reset (step 614 of FIG. 6). This timer is one that is utilized to periodically check whether a garbage collection process ought to be performed proactively by the mobile station. In this embodiment, the timer is set to between 15 - 60 seconds (e.g. about 30 seconds). While no events are being detected at step 608 of FIG. 6, this timer is running and may expire (step 618 of FIG. 6). If the timer has not expired at step 618, event monitoring continues at step 608.

If the timer is identified to have expired in step 618, then the mobile station checks whether a second predetermined "garbage collection" condition is detected or identified (step 620 of FIG. 6). This second predetermined condition may be based on one or more JVM heuristics, such as an amount of free memory allocated (e.g. a low memory condition) or a number of objects created since the previous garbage collection process (e.g. a high object creation count condition). If the second predetermined condition is identified at step 620, then a garbage collection process is started (step 622 of FIG. 6). As described above, the garbage collection process involves freeing unreachable objects of the application program to reclaim memory space and consolidating reachable objects of the application program so as to increase available contiguous memory space. When the garbage collection process is completed (step 624 of FIG. 6), the timer is reset (step 614 of FIG. 6) and the flowchart resumes again at step 606.

Note, however, that this "proactive" garbage collection process of step 622 is interruptible, or at least interruptible from user interface signals received at the user interface of the mobile device. While the garbage collection process of step 622 is running and not yet completed, the processor has an interrupt that is enabled and triggered based on a detection of a user interface signal. The interrupt is triggered, for example, in response to actuations of any user input device (e.g. an input key) of the user interface by the end user. If a user interface signal from the user interface is detected or identified during the garbage collection process (step 626 of FIG. 6), the garbage collection process is aborted (step 628 of FIG. 6) and processing resumes at step 606 after resetting the timer in step 614. Preferably, the receipt of a page message for a voice call through the wireless transceiver also provides a trigger to interrupt the garbage collection process, but the receipt of user messages (e.g. SMS or e-mail messages) through the wireless transceiver does not trigger such an interrupt.

Advantageously, using the techniques described in relation to FIG. 4, garbage collection processes are performed without substantially interfering with use of the mobile communication device by the end user.

Final Comments. As described herein, a mobile communication device has an application program which provides it with user interface functionality for communications (e.g. e-mail communications). A garbage collection process for the application program is initiated in response to detecting a predetermined condition, such as a low memory condition or a high object creation count condition, after a continuous time period of no user interface activity at a user interface of the mobile communication device is identified. The garbage collection process involves freeing unreachable objects of the application program to reclaim memory space and consolidating reachable objects of the application program so as to increase available contiguous memory space. If a user interface signal from the user interface is identified during the garbage collection process, the garbage collection process is terminated. On the other hand, an uninterruptible garbage collection process is performed in response to identifying a more severe condition, such as a memory allocation failure. Advantageously, garbage collection processes are performed without substantially interfering with use of the mobile communication device by the end user.

A mobile communication device of the present application includes one or more processors; memory which is accessible by the one or more processors; a wireless transceiver coupled to the one or more processors; and a user interface coupled to the one or more processors. The one or more processors are operative to maintain an application program stored in the memory; perform a garbage collection process for the application program; identify whether a user interface signal is received at the user interface; and terminate the garbage collection process in response to identifying the user interface signal during the garbage collection process. The one or more processors may be further operative to set and reset a timer in response to detecting a user interface signal at the user interface; identify whether a predetermined condition (e.g. low memory and/or high objection creation count condition) exists at the mobile communication device after expiration of the timer; and perform the garbage collection process in response to identifying the predetermined condition. On the other hand, an uninterruptible garbage collection process is performed in response to identifying a more severe condition, such as a memory allocation failure.

A computer program product of the present application includes a computer readable medium and computer instructions stored in the computer readable medium. The computer instructions are executable by one or more processors of a mobile communication device for maintaining an application program on the mobile communication device; performing a garbage collection process for the application program; identifying whether a user interface signal is received at a user interface of the mobile communication device; and terminating the garbage collection process in response to identifying the user interface signal during the garbage collection process. The computer instructions may be further executable for setting and resetting a timer in response to detecting a user interface signal at the user interface; identifying whether a predetermined condition (e.g. low memory and/or high objection creation count condition) exists at the mobile communication device after expiration of the timer; and performing the garbage collection process in response to identifying the predetermined condition. On the other hand, an uninterruptible garbage collection process is performed in response to identifying a more severe condition, such as a memory allocation failure.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method for use in controlling garbage collection processes in a mobile communication device, the method comprising:
providing an application program for operating the mobile communication device;
performing a garbage collection process for the application program;
identifying whether a user interface signal is received at a user interface of the mobile communication device; and
terminating the garbage collection process in response to identifying the user interface signal during the garbage collection process.

2. The method of claim 1, wherein the garbage collection process comprises the acts of:
freeing unreachable objects of the application program to reclaim memory space in memory of the mobile communication device; and
consolidating reachable objects of the application program such that available contiguous memory space in the memory is increased.

3. The method of claim 1, further comprising:
identifying whether a predetermined condition exists at the mobile communication device; and
performing the garbage collection process in response to identifying the predetermined condition.

4. The method of claim 1, further comprising:
identifying whether a predetermined condition exists at the mobile communication device;
performing the garbage collection process in response to identifying the predetermined condition; and
wherein the predetermined condition comprises one of a low memory condition and a high object creation count condition.

5. The method of claim 1, further comprising:
setting a timer and resetting the timer in response to identifying a user interface signal at the user interface;
after expiration of the timer: identifying whether a predetermined condition exists at the mobile communication device; and
performing the garbage collection process in response to identifying the predetermined condition.

6. The method of claim 1, further comprising:
maintaining the application program in a sleep mode during the garbage collection process;
running a radio communication program separate and apart from the application program; and
maintaining an interrupt of the one or more processors which interrupts the garbage collection process for its termination in response to identifying the user interface signal.

7. The method of claim 1, wherein the application program comprises an e-mail application program of the mobile communication device.

8. The method of claim 1, wherein the garbage collection process comprises a first garbage collection process and the method further comprises:
identifying a predetermined condition which is indicative of a memory allocation failure;
performing a second garbage collection process in response to identifying the predetermined condition; and
refraining from terminating the second garbage collection process performed due to the memory allocation failure.

9. A mobile communication device, comprising:
one or more processors;
memory which is accessible by the one or more processors;
a wireless transceiver coupled to the one or more processors;
a user interface coupled to the one or more processors;
the one or more processors being operative to:
maintain an application program in the memory for operating the mobile communication device;
perform a garbage collection process for the application program;
identify whether a user interface signal is received at the user interface; and
terminate the garbage collection process in response to identifying the user interface signal during the garbage collection process.

10. The mobile communication device of claim 9, wherein the one or more processors are operative to perform the garbage collection process by freeing unreachable objects of the application program to reclaim memory space in the memory and consolidating reachable objects of the application program such that available contiguous memory space in the memory is increased.

11. The mobile communication device of claim 9, wherein the one or more processors are further operative to:
identify a predetermined condition in the mobile communication device; and
perform the garbage collection process in response to identifying the predetermined condition.

12. The mobile communication device of claim 9, wherein the one or more processors are further operative to:
identify a predetermined condition in the mobile communication device;
perform the garbage collection process in response to identifying the predetermined condition; and
wherein the predetermined condition comprises one of a low memory condition and a high object creation count condition.

13. The mobile communication device of claim 9, wherein the one or more processors are further operative to:
set a timer and reset the timer in response to identifying a user interface signal at the user interface;
after expiration of the timer: identify whether a predetermined condition exists at the mobile communication device; and
perform the garbage collection process in response to identifying the predetermined condition.

14. The mobile communication device of claim 9, wherein the one or more processors are further operative to:
maintain the application program in a sleep mode during the garbage collection process;
run a radio communication program separate and apart from the application program; and
maintain an interrupt of the one or more processors which interrupts the garbage collection process for its termination in response to identifying the user interface signal.

15. The mobile communication device of claim 9, wherein the garbage collection process comprises a first garbage collection process and the one or more processors are further operative to:
identify a predetermined condition which is indicative of a memory allocation failure;
perform a second garbage collection process in response to identifying the predetermined condition; and
refrain from terminating the second garbage collection process performed due to the memory allocation failure.

16. A computer program product, comprising:
a computer readable medium;
computer instructions stored in the computer readable medium;
the computer instructions being executable by one or more processors of a mobile communication device for:
maintaining an application program for operating the mobile communication device;
performing a garbage collection process for the application program;
identifying whether a user interface signal is received at a user interface of the mobile communication device; and
terminating the garbage collection process in response to identifying the user interface signal during the garbage collection process.

17. The computer program product of claim 16, wherein the computer instructions are further executable for performing the garbage collection process by:
freeing unreachable objects of the application program to reclaim memory space in memory of the mobile communication device; and
consolidating reachable objects of the application program such that available contiguous memory space in the memory is increased.

18. The computer program product of claim 16, wherein the computer instructions are further executable for:
identifying a predetermined condition in the mobile communication device; and
performing the garbage collection process in response to identifying the predetermined condition.

19. The computer program product of claim 16, wherein the computer instructions are further executable for:
identifying a predetermined condition in the mobile communication device;
performing the garbage collection process in response to identifying the predetermined condition; and
wherein the predetermined condition comprises one of a low memory condition and a high object creation count condition.

20. The computer program product of claim 16, wherein the computer instructions are further executable for:
setting a timer and resetting the timer in response to identifying a user interface signal at the user interface;
after expiration of the timer: identifying whether a predetermined condition exists at the mobile communication device; and
performing the garbage collection process in response to identifying the predetermined condition.

21. The computer program product of claim 16, wherein the computer instructions are further executable for:
maintaining the application program in a sleep mode during the garbage collection process;
running a radio communication program separate and apart from the application program; and
maintaining an interrupt of the one or more processors which interrupts the garbage collection process for its termination in response to identifying the user interface signal.

22. The computer program product of claim 16, wherein the application program comprises an e-mail application program.

## Amended claims

### Amended claims in accordance with Rule 86(2) EPC.

**1.** A method for use in controlling garbage collection processes in a mobile communication device (202) having a user interface which includes a keyboard (232), the method comprising the steps of
providing an application program which is executed by one or more processors (238) for operating the mobile communication device (202);
performing an interruptible garbage collection process for the application program in response to identifying that a first predetermined condition exists at the mobile communication device (202);
terminating the interruptible garbage collection process in response to an end user actuation of an input key of the keyboard (232) during the interruptible garbage collection process;
performing an uninterruptible garbage collection process for the application program in response to identifying that a second predetermined condition exists at the mobile communication device (202); and
refraining from terminating the uninterruptible garbage collection process in response to an end user actuation of an input key of the keyboard (232) during the uninterruptible garbage collection process.

**2.** The method of claim 1, wherein the garbage collection process comprises the acts of:
freeing unreachable objects of the application program to reclaim memory space in memory of the mobile communication device (202); and
consolidating reachable objects of the application program such that available contiguous memory space in the memory is increased.

**3.** The method of claim 1, further comprising the steps of:
running a radio communication program, which is separate and apart from the application program, for radio communications of the mobile communication device (202); and
refraining from terminating the interruptible garbage collection process in response to receiving an e-mail message via the radio communication program during the interruptible garbage collection process.

**4.** The method of claim 3, further comprising the step:
terminating the interruptible garbage collection process in response to receiving a voice call via the radio communication program during the interruptible garbage collection process.

**5.** The method of claim 1, further comprising the steps of:
setting a timer and resetting the timer in response to identifying a user interface signal at the user interface; and
after each expiration of the timer: identifying whether the first predetermined condition exists at the mobile communication device (202).

**6.** The method of claim 5, further comprising the steps of:
maintaining the application program in a sleep mode;
after each expiration of the timer before the identifying step: exiting the sleep mode to resume operation of the application program, and after the identifying step entering the application program back into the sleep mode.

**7.** The method of claim 1, wherein the application program comprises an e-mail application program of the mobile communication device (202) and the keyboard (232) comprises an alphanumeric keyboard for use with the e-mail application program.

**8.** The method of claim 1, wherein the first predetermined condition comprises one of a low memory condition and a high object creation count condition; and wherein the second predetermined condition comprises a memory allocation failure.

**9.** A mobile communication device (202), comprising:
one or more processors (238);
memory which is accessible by the one or more processors (238);
a wireless transceiver (211) coupled to the one or more processors (238);
a user interface coupled to the one or more processors (238), the user interface including a keyboard (232);
the one or more processors (238) being operative to:
maintain an application program in the memory which is executed by the one or more processors (238) for operating the mobile communication device (202);
perform an interruptible garbage collection process for the application program in response to identifying that a first predetermined condition exists at the mobile communication device (202);
terminate the interruptible garbage collection process in response to an end user actuation of an input key of the keyboard (232) during the interruptible garbage collection process;
perform an uninterruptible garbage collection process for the application program in response to identifying that a second predetermined condition exists at the mobile communication device (202);
refrain from terminating the uninterruptible garbage collection process in response to identifying an end user actuation of an input key of the keyboard (232) during the uninterruptible garbage collection process.

**10.** The mobile communication device (202) of claim 9, wherein the one or more processors (238) are operative to perform the garbage collection process by freeing unreachable objects of the application program to reclaim memory space in the memory and consolidating reachable objects of the application program such that available contiguous memory space in the memory is increased.

**11.** The mobile communication device (202) of claim 9, wherein the one or more processors (238) are further operative to:
run a radio communication program, which is separate and apart from the application program, for radio communications of the mobile communication device (202); and
refrain from terminating the interruptible garbage collection process in response to receiving an e-mail message via the radio communication program during the interruptible garbage collection process.

**12.** The mobile communication device (202) of claim 11, wherein the one or more processors (238) are further operative to:
terminate the interruptible garbage collection process in response to receiving a voice call via the radio communication program during the interruptible garbage collection process.

**13.** The mobile communication device (202) of claim 9, wherein the one or more processors (238) are further operative to:
set a timer and reset the timer in response to identifying a user interface signal at the user interface; and
after each expiration of the timer: identify whether the first predetermined condition exists at the mobile communication device (202).

**14.** The mobile communication device (202) of claim 13, wherein the one or more processors (238) are further operative to:
maintain the application program in a sleep mode;
after each expiration of the timer before identifying whether the first predetermined condition exists: exit the sleep mode to resume operation of the application program, and after identifying whether the first predetermined condition exists enter the application program back into the sleep mode.

**15.** The mobile communication device (202) of claim 9, further comprising:
wherein the first predetermined condition comprises one of a low memory condition and a high object creation count condition of the memory; and
wherein the second predetermined condition comprises a memory allocation failure of the memory.

**16.** A computer program product, comprising:
a computer readable medium;
computer instructions stored in the computer readable medium;
the computer instructions being executable by one or more processors (238) of a mobile communication device (202) for:
maintaining an application program which is executed by the one or more processors (238) for operating the mobile communication device (202);
performing an interruptible garbage collection process for the application program in response to identifying that a first predetermined condition exists at the mobile communication device (202);
terminating the interruptible garbage collection process in response to an end user actuation of an input key of the keyboard (232) during the interruptible garbage collection process;
performing an uninterruptible garbage collection process for the application program in response to identifying that a second predetermined condition exists at the mobile communication device (202); and
refraining from terminating the uninterruptible garbage collection process in response to an input key of the keyboard (232) during the uninterruptible garbage collection process.

**17.** The computer program product of claim 16, wherein the computer instructions are further executable for performing the garbage collection process by:
freeing unreachable objects of the application program to reclaim memory space in memory of the mobile communication device (202); and
consolidating reachable objects of the application program such that available contiguous memory space in the memory is increased.

**18.** The computer program product of claim 16, wherein the computer instructions are further executable for:
running a radio communication program, which is separate and apart from the application program, for radio communications of the mobile communication device (202); and
refraining from terminating the interruptible garbage collection process in response to receiving an e-mail message via the radio communication program during the interruptible garbage collection process.

**19.** The computer program product of claim 18, wherein the computer instructions are further executable for:
terminating the interruptible garbage collection process in response to receiving a voice call via the radio communication program during the interruptible garbage collection process.

**20.** The computer program product of claim 16, wherein the computer instructions are further executable for:
setting a timer and resetting the timer in response to identifying a user interface signal at the user interface; and
after each expiration of the timer: identifying whether the first predetermined condition exists at the mobile communication device (202).

**21.** The computer program product of claim 20, wherein the computer instructions are further executable for:
maintaining the application program in a sleep mode;
after each expiration of the timer before identifying whether the predetermined condition exist: exiting the sleep mode to resume operation of the application program, and after determining whether the predetermined condition exists entering the application program back into the sleep mode.

**22.** The computer program product of claim 16, further comprising:
wherein the first predetermined condition comprises one of a low memory condition and a high object creation count condition; and
wherein the second predetermined condition comprises a memory allocation failure.
